(19) Europäisches Patentamt / European Patent Office / Office européen des brevets

(11) **EP 4 656 483 A1**

(12) **EUROPEAN PATENT APPLICATION**

(43) Date of publication:
03.12.2025 Bulletin 2025/49

(21) Application number: 24178304.2

(22) Date of filing: 27.05.2024

(51) International Patent Classification (IPC):
*B60W 30/18* (2012.01)    *B60W 30/188* (2012.01)

(52) Cooperative Patent Classification (CPC):
**B60W 30/188; B60L 15/20; B60L 15/2081;
B60W 30/18054;** B60L 2240/12; B60L 2240/642;
B60W 40/13; B60W 2050/0026; B60W 2050/0027;
B60W 2300/12; B60W 2520/04; B60W 2520/105;
B60W 2530/10; B60W 2540/10; B60W 2710/0666;
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Volvo Truck Corporation
405 08 Göteborg (SE)**

(72) Inventors:
• **Andreasson, Mattias
412 60 GÖTEBORG (SE)**
• **Heldmann, Joakim
418 72 GÖTEBORG (SE)**

(74) Representative: **Lavoix
62, rue de Bonnel
69448 Lyon Cedex 03 (FR)**

Remarks:
This application was filed on 07-03-2025 as a divisional application to the application mentioned under INID code 62.

(54)    **VEHICLE AND A METHOD FOR LIMITING FORCE PROVIDED BY A DRIVELINE OF A VEHICLE**

(57)    The invention relates to a vehicle (1) comprising a driveline (7) which comprises a motor (15) configured to provide a propulsion force to propel the vehicle, a pedal (11) configured to control a power provided by the motor when a driver press the pedal to tilt the pedal in different positions, and a control unit (9) configured to limit, at standstill, in function of an estimation of a weight of the vehicle, the propulsion force provided by the driveline to a maximal force threshold value. The control unit is con- figured to adapt, at standstill, the pedal mapping so that each position of the pedal corresponds to a predefined percentage of the maximal force threshold value, independently of the maximal force threshold value. The maximal force threshold value is calculated as a function of the weight of the vehicle, a reference inclination of the road and a reference acceleration of the vehicle. The invention further relates to a corresponding method.

FIG.1

(52) Cooperative Patent Classification (CPC): (Cont.)
    B60W 2710/083; B60Y 2200/14

## Description

## TECHNICAL FIELD

The disclosure relates generally to improve the drivability of a truck. In particular aspects, the disclosure relates to vehicle and a method for limiting force provided by a driveline of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

The driveline of a truck provides enough propulsion force to propel the truck when it is loaded with a maximal load. The propulsion force provided by the driveline is limited when the truck is not loaded with the maximal load to prevent the truck from going out of control. However, the limitation of the propulsion force is not realized at standstill and the percentage of the limited propulsion force requested from the driveline for a position of an accelerator pedal is not always the same. Thus, the driving experience, at the level of the accelerator pedal, depends on the weight of the truck, that is on the load carried by the truck.

## SUMMARY

According to a first aspect of the disclosure, a vehicle comprising a driveline which comprises a motor configured to provide a propulsion force to propel the vehicle, a pedal configured to control a power provided by the motor when a driver press the pedal to tilt the pedal in different positions, a control unit configured to limit, at standstill, in function of an estimation of a weight of the vehicle, the propulsion force provided by the driveline to a maximal force threshold value, wherein the control unit is configured to adapt, at standstill, the pedal mapping so that each position of the pedal corresponds to a predefined percentage of the maximal force threshold value, independently of the maximal force threshold value. The first aspect of the disclosure may seek to improve the drivability of the truck. A technical benefit may include improving the drivability by adapting the pedal mapping to request, for each position of the pedal, a predefined percentage of the maximal force threshold value, independently of the maximal force threshold value.

Optionally in some examples, including in at least one preferred example, the maximal force threshold value is calculated as a function of the weight of the vehicle, a reference inclination of the road and a reference acceleration of the vehicle. A technical benefit may include adapting the pedal mapping to the weight of the truck.

Optionally in some examples, including in at least one preferred example, the reference inclination of the road is comprised between 10% and 50%. A technical benefit may include improving the calculation of the maximal force threshold.

Optionally in some examples, including in at least one preferred example, the reference inclination of the road is equal to 30%. A technical benefit may include improving the calculation of the maximal force threshold.

Optionally in some examples, including in at least one preferred example, the reference acceleration of the vehicle is comprised between $0.1 \text{m.s}^{-2}$ and $2 \text{m.s}^{-2}$, preferably between $0.1 \text{m.s}^{-2}$ and $0.3 \text{m.s}^{-2}$ and preferably equal to $0.2 \text{m.s}^{-2}$. A technical benefit may include improving the calculation of the maximal force threshold.

Optionally in some examples, including in at least one preferred example, the control unit adapts, during the journey, the limitation of the propulsion force provided by the driveline when the propulsion force delivered by the driveline is close to the maximal force threshold. A technical benefit may include improving the accuracy of the maximal force threshold to optimize the drivability.

According to a second aspect of the disclosure, a method for limiting the force provided by a driveline of a vehicle according to any one of the previous claims comprising the steps of: a) collecting parameters of the vehicle, b) calculating the maximal force threshold value, c) controlling the propulsion force provided by the driveline in function of the position of the pedal. The second aspect of the disclosure may seek to improve the drivability of a truck. A technical benefit may include improving the drivability by adapting the pedal mapping to request, for each position of the pedal, force provided by the driveline in function of the position of the pedal.

Optionally in some examples, including in at least one preferred example, the collected parameters comprise a curve of the maximal propulsion force that the maximal power of the motor generates as a function of the speed of the vehicle, an estimation of the weight of the vehicle and a curve associating each position of the pedal to a defined percentage of the propulsion force of the driveline. A technical benefit may include improving the control of the force provided by the driveline.

Optionally in some examples, including in at least one preferred example, during the step of calculating, a theoretical maximal force, $F_{maxth}$, is calculated with an equation of dynamics expressed with the collected parameters as follows :

$$F_{maxth} = M * (\text{g} * \sin(I) + A) * \eta$$

where:

- $F_{maxth}$: theoretical maximal propulsion force of the vehicle expressed in Newton,
- $g$: gravitational constant expressed in meter per second squared,

- I: reference inclination of the road,
- $A$: reference acceleration of the vehicle expressed in meter per second squared,
- $\eta$: efficiency coefficient of the driveline of the vehicle,
- M: estimation of the weight of the vehicle expressed in kilogram.

A technical benefit may include improving the calculation of the maximal force threshold.

Optionally in some examples, including in at least one preferred example, the maximal force threshold value is the minimum between the propulsion force associated to the maximal power delivered by the motor and the theoretical maximal propulsion force, $F_{maxth}$ calculated. A technical benefit may include improving the calculation of the maximal force threshold.

Optionally in some examples, including in at least one preferred example, during the controlling step, the propulsion force provided by the driveline is equal to the percentage associated to the position of the pedal multiplied by the maximal force threshold value. A technical benefit may include associating each position of the pedal to a defined percentage of the maximal force threshold independently of the maximal force threshold.

Optionally in some examples, including in at least one preferred example, during the controlling step, the percentage associated to the position of the pedal is scaled before determining the propulsion force provided by the driveline. A technical benefit may include improving the drivability of the truck.

Optionally in some examples, including in at least one preferred example, after the controlling step, an adaptation step wherein the maximal force threshold value is increased to an adapted maximal force threshold value , when the propulsion force delivered by the driveline is closed to the maximal force threshold value, the adapted maximal force threshold value being kept until the next time the vehicle is at standstill. A technical benefit may include adapting the maximal force value to improve the drivability and erase error in the calculation of the maximal force threshold.

Optionally in some examples, including in at least one preferred example, the method comprises, between the collecting step and the calculating step, an adjustment step for adjusting the estimation of the weight of the vehicle. A technical benefit may include improving the accuracy of the calculation of the maximal force threshold.

Optionally in some examples, including in at least one preferred example, during the adjustment step an adjusted weight $M_{adjusted}$ is calculated in function of a percentage of the estimation of the weight of the vehicle M and a percentage of an average weight of the vehicle $M_{average}$ as follows :

$$M_{adjusted} = x * M_{average} + (1 - x) * M$$

where:

- $M_{adjusted}$: adjusted weight of the vehicle expressed in kilogram,
- $M_{average}$: average weight of the vehicle expressed in kilogram,
- M: estimation of the weight of the vehicle expressed in kilogram,
- $x$: percentage

A technical benefit may include improving the accuracy of the calculation of the maximal force threshold.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

**BRIEF DESCRIPTION OF THE DRAWINGS**

Examples are described in more detail below with reference to the appended drawings.

> **FIG. 1** is a schematic view of a vehicle according to an embodiment of the invention.
> **FIG. 2** is a flowchart of an example of a method according to an embodiment of the invention.
> **FIG. 3** illustrates an example of a maximal force threshold as function the weight of the vehicle of the figure 1.
> **FIG. 4** illustrates an example of the curve associating the percentage of the maximal force threshold to an accelerator pedal position.

**DETAILED DESCRIPTION**

The detailed description set forth below provides information and examples of the disclosed technology with sufficient detail to enable those skilled in the art to practice the disclosure.

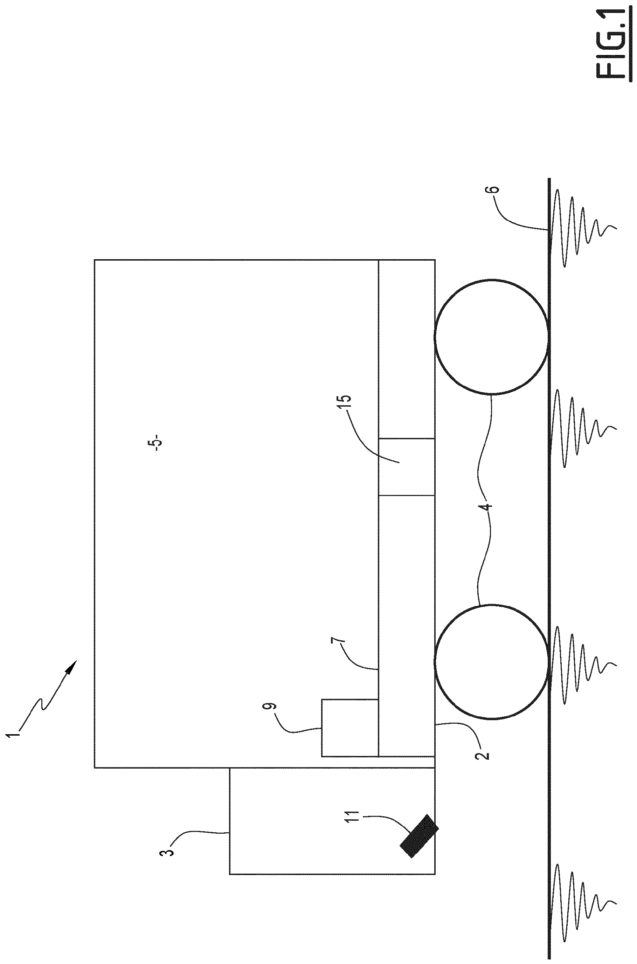

Figure 1 depicts a vehicle 1, comprising a frame 2, a driving cabin 3, wheels 4, a load compartment 5, a driveline 7 and a control unit 9, according to an embodiment of the invention.

The driving cabin 3 is supported by the frame 2 and positioned at the front of the vehicle 1. The vehicle 1 is drivable by a driver. The driver inside the driving cabin 3 controls the vehicle 1.

The driving cabin 3 comprises a pedal 11. The pedal 11 tilts in different positions when the driver presses the pedal 11 with his foot.

Products can be stored in the load compartment 5 to be carried from one place to another. The load compartment 5 is supported by the frame 2 and positioned at the back of the vehicle 1. In a variant, not shown, the load compartment 5 is supported by a second frame, hooked to the frame 2.

The wheels 4 are mounted on the frame 2 and configured to rotate to enable the movement of the vehicle 1 on a road 6.

The driveline 7 comprises a motor 15. The motor 15 comprises a non-represented output shaft, which rotates when the motor 15 is actuated. The rotation of the output shaft rotates the wheels.

The driveline provides a propulsion force to the vehicle 1 to propel the vehicle 1. The propulsion force is the result of a mechanical transformation by the driveline 7 of a couple provided by the motor 15 to the output shaft.

Thus, the propulsion force is limited by the couple provided by the motor 15.

The couple provided by the motor 15 is limited by the maximal power of the motor 15. Thus, the propulsion force is limited by the maximal power of the motor 15.

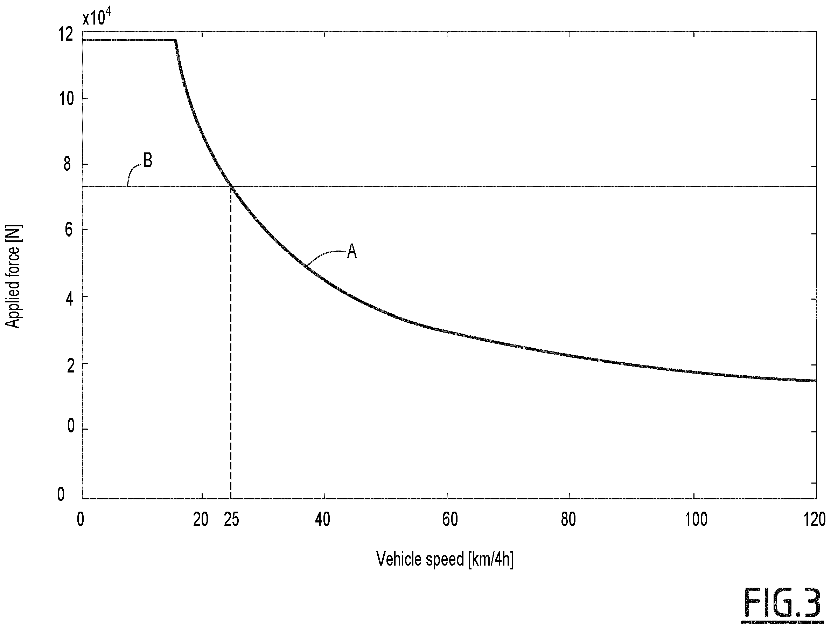

The curve A in figure 3 shows the maximal propulsion force that the maximal power of the motor 15 generates, as a function of the speed of the vehicle 1.

The control unit 9 is configured to limit, at standstill, in function of an estimation of the weight of the vehicle 1, the propulsion force provided by the driveline to a maximal force threshold value.

Advantageously, the control unit 9 is adapted to carry out a method for limiting the propulsion force provided by the driveline 7, such method being thus a computer-implemented method.

More generally, the control unit 9 is a computer or computing system, or similar electronic computing device adapted to manipulate and/or transform parameter represented as physical, such as electronic, quantities within the computing system's registers and/or memories into other parameter similarly represented as physical quantities within the computing system's memories, registers or other such information storage, transmission or display devices.

The control unit 9 comprises a processor. The processor comprises a parameter-processing unit, memories and a reader. The reader is adapted to read a computer readable medium.

The computer program product comprises a computer readable medium.

The computer readable medium is a medium that can be read by the reader of the processor. The computer readable medium is a medium suitable for storing electronic instructions, and capable of being coupled to a computer system bus.

Such computer readable storage medium is, for instance, a disk, a floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

A computer program is stored in the computer readable storage medium. The computer program comprises one or more stored sequence of program instructions.

The computer program is loadable into the parameter-processing unit and adapted to cause execution of the method to limit the propulsion force provided by the driveline 7 when the computer program is run by the parameter-control unit.

The vehicle 1 comprises weight sensor, not shown, configured to determine an estimation of the weight of the vehicle 1.

The control unit 9 is connected to the weight sensor, the driveline 7 and the pedal 11.

In a variant not shown, the control unit 9 comprises an interface on which the driver indicates an estimation of the weight of the vehicle 1.

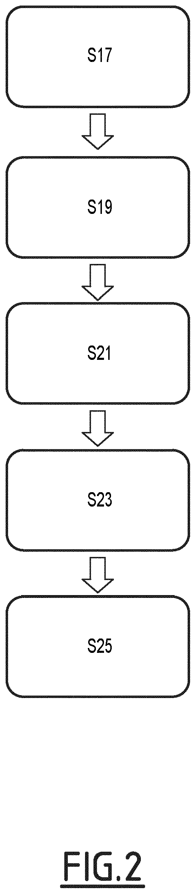

An example of operating of the control unit 9 is now described in reference to figure 2, which is a flowchart of an example of carrying out a method for limiting the propulsion force provided by the driveline.

The method for limiting the propulsion force provided by the driveline to the maximal force threshold value aims at obtaining a pedal mapping such as each position of the pedal 11 corresponds to a defined percentage of the maximal force threshold value, independently of the maximal force threshold value.

According to the example of figure 2, the method for limiting the propulsion force delivered by the driveline 7 comprises a collecting step S17, a calculating step S21 and a controlling step S23. The collecting step 17 and the calculating step 21 are realized when the vehicle 1 is at standstill.

At standstill, during the collecting step S21, the control unit 9 collects several input parameters.

For this, depending on the case, the control unit 9 receives said parameter, for instance by reading a memory or obtains the parameter by requesting a measurement.

Advantageously, the input parameters comprise at least the curve A shown on figure 3 and which is representative of the maximal power of the motor 15, the estimation of the weight of the vehicle 1 and a curve associating each position of the pedal 11 to a defined percentage of the propulsion force of the driveline 7.

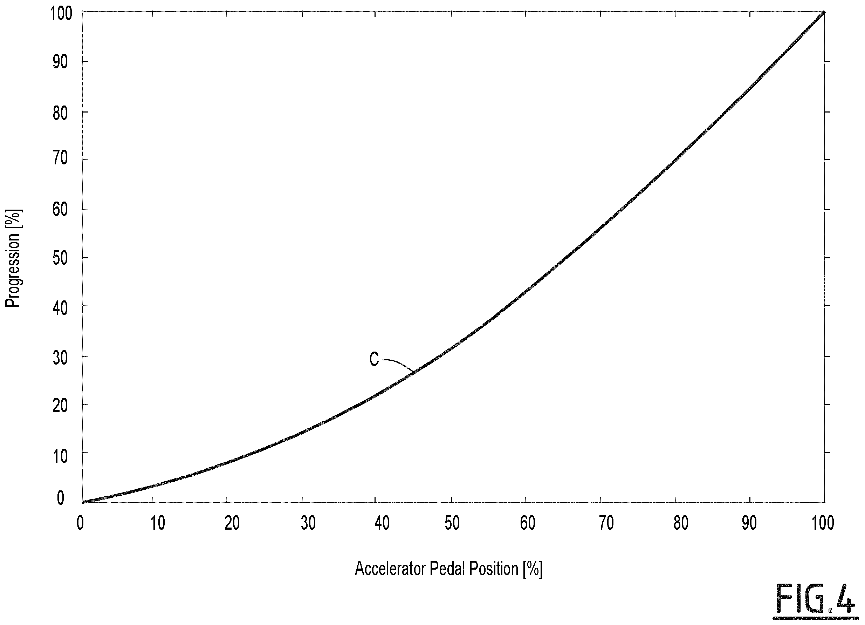

An example of a curve associating each position of the pedal 11 to a defined percentage of the propulsion force of the driveline 7 is represented on the figure 4, with curve C.

The input parameters also comprise the efficiency of the driveline 7 and reference variables.

The efficiency of the driveline 7 is calculated from the measure of the driveline 7 output mechanical power and the measure of the driveline 7 input electrical power. In this case, the efficiency of the driveline 7 is equal to the driveline 7 output mechanical power divided by the measure of the driveline 7 input electrical power.

Example of the reference variables are the reference inclination of the road 6 and the reference acceleration of the vehicle 1. The reference variables correspond to the desired acceleration when the vehicle 1 travels on the road 6 with an inclination equal to the reference inclination and when the driver presses the pedal 11 to its maximum.

Advantageously the reference inclination of the road 6 is comprised between 10% and 50%, and advantageously is equal to 30%.

Advantageously, the reference acceleration of the vehicle is comprised between $0.1m.s^{-2}$ and $2m.s^{-2}$, preferably between $0.1m.s^{-2}$ and $0.3m.s^{-2}$ and preferably equals to 0.2m.s' a

Advantageously, the method comprises an adjustment step for adjusting S19 the estimation of the weight of the vehicle 1. The adjustment step S19 is realized at standstill, just after the collecting step S17.

Advantageously, during the adjustment step S19, an adjusted weight $M_{adjusted}$ is calculated as a function of a percentage of the estimation of the weight of the vehicle M and a percentage of an average weight of the vehicle $M_{average}$ as follows:

$$M_{adjusted} = x * M_{average} + (1-x) * \text{M}$$

where:

- $M_{adjusted}$: adjusted weight of the vehicle 1 expressed in kilogram,
- $M_{average}$: average weight of the vehicle 1 expressed in kilogram,
- M: estimation of the weight of the vehicle 1 expressed in kilogram,
- $x$: percentage

The average weight $M_{average}$ corresponds to the average of the weights of the vehicle 1 during its different journeys. For example, the average weight can be calculated with the estimation weights of vehicle 1 during its last 100 journeys or with estimation weights of vehicle 1 during its journeys during the last month.

In a variant, the average weight $M_{average}$ is a fixed value selected when the vehicle was manufactured.

At standstill, during the calculating step S21, the control unit 9 calculates the maximal force threshold value.

For this, the control unit 9 uses the collected parameters and obtains said maximal force threshold value. In particular, the maximal force threshold value is calculated as a function of the adjusted weight of the vehicle 1, the reference inclination of the road 6 and the reference acceleration of the vehicle 1.

An example of implementation of such calculating step S23 is now detailed.

The control unit 9 calculates, in function of the estimation of the weight of the vehicle 1, a theatrical maximal propulsion force $F_{maxth}$, which corresponds to the propulsion force needed to have the reference acceleration in a road 6 with the reference inclination when the vehicle 1 weighs the estimated weight.

Advantageously, the theatrical maximal propulsion force $F_{maxth}$ is calculated with an equation of dynamics dynamics expressed with the collected parameters as follows:

$$F_{maxth} = M * (\text{g} * \sin(I) + A) * \text{η}$$

where:

- $F_{maxth}$: theoretical maximal propulsion force of the vehicle 1 expressed in Newton,
- $g$: gravitational constant expressed in meter per second squared,
- I: reference inclination of the road 6,
- $A$: reference acceleration of the vehicle 1 expressed in meter per second squared,
- η: efficiency coefficient of the driveline of the vehicle 1,
- M: estimation of the weight of the vehicle 1 expressed in kilogram.

Curve B in figure 3 represents the theoretical maximal propulsion force of the example.

Advantageously, the control unit 9 calculated the maximal force threshold value as the minimum of the between the propulsion force associated to the maximal power delivered by the motor 15 and the theoretical maximal propulsion force, $F_{maxth}$ calculated.

In particular, in this example, as shown on the figure 3, the maximal force threshold value equals theoretical maximal propulsion force, $F_{maxth}$ when the speed of the vehicle 1 is comprised between 0 and 25 kilometer per hour and the maximal force threshold value equals the propulsion force associated to the maximal power delivered by the motor 15 when the speed of the vehicle 1 is comprised between 25 and 120 kilometer per hour.

More generally, the maximal force threshold value equals the theoretical maximal propulsion force, $F_{maxth}$ at low speed and the maximal force threshold value equals the propulsion force associated to the maximal power delivered by the motor 15 at high speed.

The controlling step S23 is realized after the calculating step S21, at standstill.

During the controlling step S23, the control unit 9 controls the propulsion force provided by the driveline 7.

More generally, the control unit 9 controls the couple or the power provided by the motor 15.

During the controlling step S23, the control unit 9 adapts, at standstill, the pedal mapping so that each position of the pedal 11 corresponds to a predefined percentage of the maximal force threshold value, independently of the maximal force threshold value.

In other words, when the driver presses the pedal 11 to tilt the pedal 11, the control unit 9 controls the propulsion force delivered by the driveline 7 so that the propulsion force delivered by the driveline 7 is equal to a percentage of the maximal force threshold value, the percentage being equals to the percentage associating to the position of the pedal 11 according to the curve of the figure 4.

More generally, the propulsion force provided by the driveline 7 is equal to the percentage associated to the position of the pedal 11 multiplied by the maximal force threshold value.

Advantageously, the percentage associated to the position of the pedal is scaled before determining the propulsion force provided by the driveline 7. In particular, the control unit 9 scaled the percentage associated to the position of the pedal to adapt to the driving habits of the driver.

Advantageously, the method comprises a adaptation step for adapting S25 the maximal force threshold value. The adaptation step S25 is realized after the step of controlling S23 when the vehicle 1 is moving.

During the adaptation step S25, the control unit 9 increases the maximal force threshold value to an adapted maximal force threshold value when the propulsion force delivered by the driveline is close to the maximal force threshold value. The control unit 9 keeps the adapted maximal force threshold value until the next time the vehicle 1 is at standstill.

The limitation of the propulsion force delivered by the driveline 7 in function of the weight of the vehicle 1 by the control unit 9, at standstill, enables the driveline 7 to deliver a maximal power to propel the vehicle 1 when the vehicle is loaded to its maximum, while preventing the vehicle to be uncontrollable when the vehicle 1 is not loaded.

Moreover, the adaptation of the pedal mapping by the control unit 9, with a constant percentage of the maximal force threshold value for a predefined position of the pedal 11, enables a better drivability of the vehicle 1.

The adjustment of the estimation of the weight of the vehicle 1 by the control unit 9 increases the accuracy of the maximal force threshold value despite the measurement deviation of the sensors.

The adaptation of the maximal force threshold value during the travel of the vehicle 1 increases the accuracy of the maximal force threshold value despite the measurement deviation of the sensors.

**Example 1:** A vehicle 1, comprising:

- a driveline 7 which comprises a motor 15 configured to provide a propulsion force to propel the vehicle 1,
- a pedal 11 configured to control a power provided by the motor 15 when a driver press the pedal 11 to tilt the pedal 11 in different positions,
- a control unit 9 configured to limit, at standstill, in function of an estimation of a weight of the vehicle 1, the propulsion force provided by the driveline 7 to a maximal force threshold value,

wherein the control unit 9 is configured to adapt, at standstill, the pedal mapping so that each position of the pedal 11 corresponds to a defined percentage of the maximal force threshold value, independently of the maximal force threshold value.

**Example 2:** The vehicle 1 of example 1, wherein the maximal force threshold value is calculated as a function of the weight of the vehicle 1, a reference inclination of the road 6 and a reference acceleration of the vehicle 1.

**Example 3:** The vehicle 1 of example 2, wherein the reference inclination of the road 6 is comprised between 10% and 50%.

**Example 4:** The vehicle 1 of example 3, wherein the reference inclination of the road 6 is equal to 30%.

**Example 5:** The vehicle 1 of any one of the preceding examples, the reference acceleration of the vehicle 1 is comprised between $0.1 \text{m.s}^{-2}$ and $2 \text{m.s}^{-2}$, preferably between $0.1 \text{m.s}^{-2}$ and $0.3 \text{m.s}^{-2}$ and preferably equals to $0.2 \text{m.s}^{-2}$.

**Example 6:** The vehicle 1 of any one of the preceding examples, wherein the control unit 9 adapts, during the journey, the limitation of the propulsion force provided by the driveline 7 when the propulsion force delivered by the driveline 9 is closed to the maximal force threshold.

**Example 7:** The vehicle 1 of any one of the preceding examples, comprising weight sensor, configured to determine an estimation of the weight of the vehicle 1, the weight sensor being connected to the control unit 9.

**Example 8:** The vehicle 1 of any one of the examples 1 to 6, wherein the control unit 9 comprises an interface on which the driver indicates an estimation of the weight of the vehicle 1.

**Example 9:** A method for limiting the force provided by a driveline 7 of a vehicle 1 according to any one of the preceding examples comprising the steps of :

    a) collecting parameters S17 of the vehicle,
    b) calculating S21 the maximal force threshold value,
    c) controlling S23 the propulsion force provided by the driveline in function of the position of the pedal.

**Example 10:** The method of example 9, wherein, the collected parameters comprise a curve A of the maximal propulsion force that the maximal power of the motor 15 generates as a function of the speed of the vehicle 1, an estimation of the weight of the vehicle 1 and a curve associating each position of the pedal to a defined percentage of the propulsion force of the driveline 7.

**Example 11:** The method of example 10, wherein, during the step of calculating S23, a theoretical maximal force, $F_{maxth}$, is calculated with an equation of dynamics expressed with the collected parameters as follows:

$$F_{maxth} = M * (g * \sin(I) + A) * \eta$$

where:

- $F_{maxth}$: theoretical maximal propulsion force of the vehicle 1 expressed in Newton,
- $g$: gravitational constant expressed in meter per second squared,
- I: reference inclination of the road 6,
- $A$: reference acceleration of the vehicle 1 expressed in meter per second squared,
- $\eta$: efficiency coefficient of the driveline of the vehicle,
- M: estimation of the weight of the vehicle 1 expressed in kilogram.

**Example 12:** The method of example 11, wherein the maximal force threshold value is the minimum between the propulsion force associated to the maximal power delivered by the motor 15 and the theoretical maximal propulsion force, $F_{maxth}$ calculated.

**Example 13:** The method of any one of the examples 11 or 12, wherein, during the controlling step S23, the propulsion force provided by the driveline 7 is equal to the percentage associated to the position of the pedal 11 multiplied by the maximal force threshold value.

**Example 14:** The method of example 13, wherein during the controlling step S23, the percentage associated to the position of the pedal 11 is scaled before determining the propulsion force provided by the driveline.

**Example 15:** The method of any one of the preceding examples, comprising, after the controlling step S23, an adaptation step S25 the maximal force threshold value by increasing the maximal force threshold value, when the propulsion force delivered by the driveline 7 is close to the maximal force threshold value, the adapted maximal force being kept until the next time the vehicle 1 is at standstill.

**Example 16:** The method of any one of the examples 12 to 15, comprising between the collecting step S17 and the calculating step S21, an adjustment step S19 for adjusting the estimation of the weight of the vehicle 1.

**Example 17:** The method of example 16, wherein during the adjustment step S19 an adjusted weight $M_{adjusted}$ is calculated in function of a percentage of the estimation of the weight of the vehicle M and a percentage of an average weight of the vehicle $M_{average}$ as follows:

$$M_{adjusted} = x * M_{average} + (1 - x) * M$$

where:

- $M_{adjusted}$: adjusted weight of the vehicle 1 expressed in kilogram,
- $M_{average}$: average weight of the vehicle 1 expressed in kilogram,
- M: estimation of the weight of the vehicle 1 expressed in kilogram,
- $x$: percentage

**Example 18:** The method of any one of the preceding examples, wherein, during the controlling step S23, the control unit 9 controls the couple provided by the motor 15.

**Example 19:** The method of any one of the examples 7 to 15, wherein, during the controlling step S23, the control unit 9 controls the power provided by the motor 15.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A vehicle (1) comprising

   - a driveline (7) which comprises a motor (15) configured to provide a propulsion force to propel the vehicle (1),
   - a pedal (11) configured to control a power provided by the motor (15) when a driver presses the pedal (11) to tilt the pedal (11) in different positions,
   - a control unit (9) configured to limit, at standstill, in function of an estimation of a weight of the vehicle (1), the propulsion force provided by the driveline (7) to a maximal force threshold value,

   wherein the control unit (9) is configured to adapt, at standstill, the pedal mapping so that each position of the pedal (11) corresponds to a predefined percentage of the maximal force threshold value, independently of the maximal force threshold value.

2. The vehicle (1) according to claim 1 wherein the maximal force threshold value is calculated as a function of the weight of the vehicle (1), a reference inclination of the road (6) and a reference acceleration of the vehicle (1).

3. The vehicle (1) according to claim 2, wherein the reference inclination of the road (6) is comprised between 10% and 50%.

4. The vehicle (1) according to the previous claim, wherein the reference inclination of the road (6) is equal to 30%.

5. The vehicle (1) according to the any one of the previous claims, wherein the reference acceleration of the vehicle (1) is comprised between $0.1 \text{m.s}^{-2}$ and $2 \text{m.s}^{-2}$, preferably between $0.1 \text{m.s}^{-2}$ and $0.3 \text{m.s}^{-2}$ and preferably equal to $0.2 \text{m.s}^{-2}$.

6. The vehicle (1) according to any one of the previous claims, wherein the control unit (9) adapts, during the journey, the limitation of the propulsion force provided by the driveline (7) when the propulsion force delivered by the driveline (9) is close to the maximal force threshold.

7. A method for limiting the force provided by a driveline (7) of a vehicle (1) according to any one of the previous claims comprising the steps of :

   a) collecting parameters (S17) of the vehicle,
   b) calculating (S21) the maximal force threshold value,
   c) controlling (S23) the propulsion force provided by the driveline in function of the position of the pedal.

8. The method according to the previous claim, wherein, the collected parameters comprise a curve (A) of the maximal propulsion force that the maximal power of the motor (15) generates as a function of the speed of the vehicle (1), an estimation of the weight of the vehicle (1) and a curve (C) associating each position of the pedal to a defined percentage of the propulsion force of the driveline (7).

9. The method according to the previous claim, wherein, during the step of calculating (S23), a theoretical maximal force, $F_{maxth}$, is calculated with an equation of dynamics expressed with the collected parameters as follows :

$$F_{maxth} = M * (g * \sin(I) + A) * \eta$$

   where:

   • $F_{maxth}$: theoretical maximal propulsion force of the vehicle (1) expressed in Newton,
   • $g$: gravitational constant expressed in meter per second squared,
   • I: reference inclination of the road (6),
   • $A$ : reference acceleration of the vehicle (1) expressed in meter per second squared,
   • $\eta$: efficiency coefficient of the driveline of the vehicle,
   • M: estimation of the weight of the vehicle (1) expressed in kilogram.

10. The method according to the previous claim, wherein the maximal force threshold value is the minimum between the propulsion force associated to the maximal power delivered by the motor (15) and the theoretical maximal propulsion force, $F_{maxth}$ calculated.

11. The method according to any one of the claims 9 to 10, wherein, during the controlling step (S23), the propulsion force provided by the driveline (7) is equal to the percentage associated to the position of the pedal (11) multiplied by the maximal force threshold value.

12. The method according to the previous claim, wherein during the controlling step (S23), the percentage associated to the position of the pedal (11) is scaled before determining the propulsion force provided by the driveline.

13. The method according to any one of claims 7 to 12, comprising, after the controlling step (S23), an adaptation step (S25) wherein the maximal force threshold value is increased to an adapted maximal force threshold value , when the propulsion force delivered by the driveline (7) is close to the maximal force threshold value, the adapted maximal force threshold value being kept until the next time the vehicle (1) is at standstill.

14. The method according to any one of the claims 8 to 13, comprising between the collecting step (S17) and the calculating step (S21), an adjustment step (S19) for adjusting the estimation of the weight of the vehicle (1).

15. The method according to the previous claim, wherein during the adjustment step (S19) an adjusted weight $M_{adjusted}$ is calculated in function of a percentage of the estimation of the weight of the vehicle M and a percentage of an average weight of the vehicle $M_{average}$ as follows :

$$M_{adjusted} = x * M_{average} + (1 - x) * M$$

where:

• $M_{adjusted}$: adjusted weight of the vehicle (1) expressed in kilogram,
• $M_{average}$: average weight of the vehicle (1) expressed in kilogram,
• M: estimation of the weight of the vehicle (1) expressed in kilogram,
• $x$ : percentage

**Amended claims in accordance with Rule 137(2) EPC.**

1. A vehicle (1) comprising

- a driveline (7) which comprises a motor (15) configured to provide a propulsion force to propel the vehicle (1),
- a pedal (11) configured to control a power provided by the motor (15) when a driver presses the pedal (11) to tilt the pedal (11) in different positions,

- a control unit (9) configured to limit, at standstill, in function of an estimation of a weight of the vehicle (1), the propulsion force provided by the driveline (7),

**characterized in that** the control unit (9) is configured to :

- limit the propulsion force provided by the driveline (7) to a maximal force threshold value, and
- adapt, at standstill, the pedal mapping so that each position of the pedal (11) corresponds to a predefined percentage of the maximal force threshold value, independently of the maximal force threshold value.

2. The vehicle (1) according to claim 1 wherein the maximal force threshold value is calculated as a function of the weight of the vehicle (1), a reference inclination of the road (6) and a reference acceleration of the vehicle (1).

3. The vehicle (1) according to claim 2, wherein the reference inclination of the road (6) is comprised between 10% and 50%.

4. The vehicle (1) according to the previous claim, wherein the reference inclination of the road (6) is equal to 30%.

5. The vehicle (1) according to the any one claims 2 to 4, wherein the reference acceleration of the vehicle (1) is comprised between $0.1m.s^{-2}$ and $2m.s^{-2}$, preferably between $0.1m.s^{-2}$ and $0.3m.s^{-2}$ and preferably equal to $0.2m.s^{-2}$.

6. The vehicle (1) according to any one of the previous claims, wherein the control unit (9) adapts, during a journey, the limitation of the propulsion force provided by the driveline (7) when the propulsion force delivered by the driveline (9) is close to the maximal force threshold.

7. A method for limiting the force provided by a driveline (7) of a vehicle (1) according to any one of the previous claims comprising a step of adapting , at standstill, the pedal mapping so that each position of the pedal (11) corresponds to a predefined percentage of the maximal force threshold value, independently of the maximal force threshold value, the step of adapting comprising the steps of :

a) collecting parameters (S17) of the vehicle,
b) calculating (S21) the maximal force threshold value,
c) controlling (S23) the propulsion force provided by the driveline in function of the position of the pedal.

8. The method according to the previous claim, wherein, the collected parameters comprise a curve (A) of the maximal propulsion force that the maximal power of the motor (15) generates as a function of the speed of the vehicle (1), an estimation of the weight of the vehicle (1) and a curve (C) associating each position of the pedal to a defined percentage of the propulsion force of the driveline (7).

9. The method according to the previous claim, wherein, during the step of calculating (S23), a theoretical maximal force, $F_{maxt}$, is calculated with an equation of dynamics expressed with the collected parameters as follows :

$$F_{max} = M * (g * \sin(I) + A) * \eta$$

where:

   • $F_{maxth}$: theoretical maximal propulsion force of the vehicle (1) expressed in Newton,
   • $g$: gravitational constant expressed in meter per second squared,
   • I : reference inclination of the road (6),
   • $A$ : reference acceleration of the vehicle (1) expressed in meter per second squared,
   • $\eta$: efficiency coefficient of the driveline of the vehicle,
   • M: estimation of the weight of the vehicle (1) expressed in kilogram.

10. The method according to the previous claim, wherein the maximal force threshold value is the minimum between the propulsion force associated to the maximal power delivered by the motor (15) and the theoretical maximal propulsion force, $F_{maxth}$ calculated.

11. The method according to any one of the claims 9 to 10, wherein, during the controlling step (S23), the propulsion force provided by the driveline (7) is equal to the percentage associated to the position of the pedal (11) multiplied by the maximal force threshold value.

12. The method according to the previous claim, wherein during the controlling step (S23), the percentage associated to the position of the pedal (11) is scaled before determining the propulsion force provided by the driveline.

13. The method according to any one of claims 7 to 12, comprising, after the controlling step (S23), an adaptation step (S25) wherein the maximal force threshold value is increased to an adapted maximal force threshold value , when the propulsion force delivered by the driveline (7) is close to the maximal force threshold value, the adapted maximal force threshold value being kept until the next time the vehicle (1) is at standstill.

14. The method according to any one of the claims 8 to 13, comprising between the collecting step (S17) and the calculating step (S21), an adjustment step (S19) for adjusting the estimation of the weight of the vehicle (1).

15. The method according to the previous claim, wherein during the adjustment step (S19) an adjusted weight $M_{adjusted}$ is calculated in function of a percentage of the estimation of the weight of the vehicle M and a percentage of an average weight of the vehicle $M_{average}$ as follows :

$$M_{adjusted} = x * M_{average} + (1 - x) * M$$

where:

   • $M_{adjusted}$: adjusted weight of the vehicle (1) expressed in kilogram,
   • $M_{average}$: average weight of the vehicle (1) expressed in kilogram,
   • M: estimation of the weight of the vehicle (1) expressed in kilogram,
   • $x$ : percentage

FIG.1

S17

S19

S21

S23

S25

FIG.2

FIG.3

EP 4 656 483 A1

FIG.4

Europäisches Patentamt
European Patent Office
Office européen des brevets

# EUROPEAN SEARCH REPORT

**Application Number**

EP 24 17 8304

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FR 3 135 687 A1 (RENAULT SAS [FR]) 24 November 2023 (2023-11-24) * paragraph [0010] - paragraph [0036]; figures 1-5 * | 1-15 | INV. B60W30/18 B60W30/188 |
| A | EP 3 727 970 B1 (RENAULT SAS [FR]) 2 February 2022 (2022-02-02) * paragraph [0019] - paragraph [0064]; figures 1-4 * | 1-15 | |
| A | CA 3 165 495 A1 (PACCAR INC [US]) 24 December 2022 (2022-12-24) * paragraph [0044] - paragraph [0050]; figure 5 * * the whole document * | 1-15 | |
| A | US 11 802 517 B1 (HAWLEY THOMAS S [US] ET AL) 31 October 2023 (2023-10-31) * column 2, line 8 - column 5, line 5; figures 1-4 * | 1-15 | |
| A | DE 10 2021 111699 A1 (GM GLOBAL TECH OPERATIONS LLC [US]) 9 June 2022 (2022-06-09) * paragraph [0007] - paragraph [0012] * * paragraph [0031] - paragraph [0042]; figures 1-4 * * the whole document * | 1-15 | TECHNICAL FIELDS SEARCHED (IPC) B60W B60L |
| A | DE 10 2004 038747 A1 (DAIMLER CHRYSLER AG [DE]) 23 February 2006 (2006-02-23) * paragraph [0005] - paragraph [0027]; figure 1 * | 1-15 | |
| A | US 2017/058808 A1 (GENNARD JAMES [GB] ET AL) 2 March 2017 (2017-03-02) * paragraph [0021] - paragraph [0035]; figures 1-4 * | 1-15 | |

The present search report has been drawn up for all claims

| Place of search | Date of completion of the search | Examiner |
|---|---|---|
| Munich | 12 November 2024 | Engelhardt, Helmut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 8304

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2024

| Patent document cited in search report | | Publication date | Patent family member(s) | | Publication date |
|---|---|---|---|---|---|
| FR 3135687 | A1 | 24-11-2023 | NONE | | |
| EP 3727970 | B1 | 02-02-2022 | EP | 3727970 A1 | 28-10-2020 |
| | | | FR | 3075735 A1 | 28-06-2019 |
| | | | WO | 2019121624 A1 | 27-06-2019 |
| CA 3165495 | A1 | 24-12-2022 | CA | 3165495 A1 | 24-12-2022 |
| | | | EP | 4108533 A1 | 28-12-2022 |
| | | | US | 2022410888 A1 | 29-12-2022 |
| US 11802517 | B1 | 31-10-2023 | NONE | | |
| DE 102021111699 | A1 | 09-06-2022 | CN | 114590134 A | 07-06-2022 |
| | | | DE | 102021111699 A1 | 09-06-2022 |
| | | | US | 2022176827 A1 | 09-06-2022 |
| DE 102004038747 | A1 | 23-02-2006 | NONE | | |
| US 2017058808 | A1 | 02-03-2017 | EP | 3107789 A1 | 28-12-2016 |
| | | | GB | 2523177 A | 19-08-2015 |
| | | | US | 2017058808 A1 | 02-03-2017 |
| | | | WO | 2015124634 A1 | 27-08-2015 |

EPO FORM P0459

For more details about this annex : see Official Journal of the European Patent Office, No. 12/82